(19) **Europäisches Patentamt**
**European Patent Office**
**Office européen des brevets**

(11) **EP 2 626 731 B1**

(12) **EUROPEAN PATENT SPECIFICATION**

(45) Date of publication and mention
of the grant of the patent:
**03.02.2016 Bulletin 2016/05**

(51) Int Cl.:
***G02B 6/124*** *(2006.01)*     ***G02B 6/34*** *(2006.01)*

(21) Application number: **12154297.1**

(22) Date of filing: **07.02.2012**

(54) **An optical coupling arrangement**

Optische Kopplungsanordnung

Agencement de couplage optique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2013 Bulletin 2013/33**

(73) Proprietor: **Huawei Technologies Co., Ltd.
Longgang District
Shenzhen, Guangdong 518129 (CN)**

(72) Inventors:
• **Taillaert, Dirk
9000 Gent (BE)**
• **Lardenois, Sébastien
9840 De Pinte (BE)**

(74) Representative: **Körber, Martin Hans et al
Mitscherlich PartmbB
Patent- und Rechtsanwälte
Postfach 33 06 09
80066 München (DE)**

(56) References cited:
**US-A1- 2004 156 590**     **US-A1- 2005 141 812**
**US-A1- 2011 075 970**

• **ROELKENS G ET AL: "Grating-Based Optical
Fiber Interfaces for Silicon-on-Insulator Photonic
Integrated Circuits", IEEE JOURNAL OF
SELECTED TOPICS IN QUANTUM
ELECTRONICS, IEEE SERVICE CENTER,
PISCATAWAY, NJ, US, vol. 17, no. 3, 1 May 2011
(2011-05-01), pages 571-580, XP011326458, ISSN:
1077-260X, DOI: 10.1109/JSTQE.2010.2069087**
• **ERIKSSON N ET AL: "Surface-emitting unstable-
resonator lasers with integrated diffractive beam-
forming elements", IEEE PHOTONICS
TECHNOLOGY LETTERS, IEEE SERVICE
CENTER, PISCATAWAY, NJ, US, vol. 9, no. 12, 1
December 1997 (1997-12-01), pages 1570-1572,
XP011425471, ISSN: 1041-1135, DOI:
10.1109/68.643264**
• **TAILLAERT D ET AL: "Grating couplers for
coupling between optical fibers and
nanophotonic waveguides", JAPANESE
JOURNAL OF APPLIED PHYSICS, JAPAN
SOCIETY OF APPLIED PHYSICS, JP, vol. 45, no.
8A, 17 April 2006 (2006-04-17), pages 6071-6077,
XP002463039, ISSN: 0021-4922, DOI:
10.1143/JJAP.45.6071**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

**Field of the Invention**

The present invention generally relates to an improved optical coupler for coupling laser light between an integrated optical waveguide and a light source (e.g. a VCSEL). The invention in particular envisages applications wherein a gap of 30 to 300 microns between the integrated optical waveguide and the light source is unavoidable. This is for instance the case when an intermediate transparent device is located in between the optical waveguide and the light source, or when the light source is a front-side emitting VCSEL with bonded wires or a back-side emitting VCSEL. The invention in particular aims at disclosing an optical coupler that efficiently couples and focuses light in applications where such gap of 30 to 300 microns is bridged, while being manufactured with standard tools available in a CMOS fab and without requiring a lens.

**Background of the Invention**

It is state of the art to use lenses between an optical waveguide and a light source/receiver in order to focus the light and compensate for divergence of the light beam. The lens however is an additional component that is expensive and complex to manufacture and position accurately. As an alternative to a lens, a micro-lens can be considered. Such micro-lens can be made small and with a focal distance below 300 microns. The fabrication process of micro-lenses is rather complex and non-standard.

The international patent application WO 2004/072693 entitled "Optical Waveguide Grating Coupler" describes a grating coupler for coupling light between a planar on-chip waveguide (100 in Fig. 4) and an optical fibre (106 in Fig. 4). The grating coupler described in WO 2004/072693 has a rather complex structure with hyperbolic shaped sidewalls and elliptic shaped scattering elements to compensate for the disparity in size between the optical fibre and waveguide and optical losses resulting from this disparity. Apart from the complex structure, WO 2004/072693 does not recognize situations or applications wherein a distance of 30 to 300 micron has to be bridged between the waveguide and fibre and consequently does not consider the problem of light beam divergence when bridging such a gap.

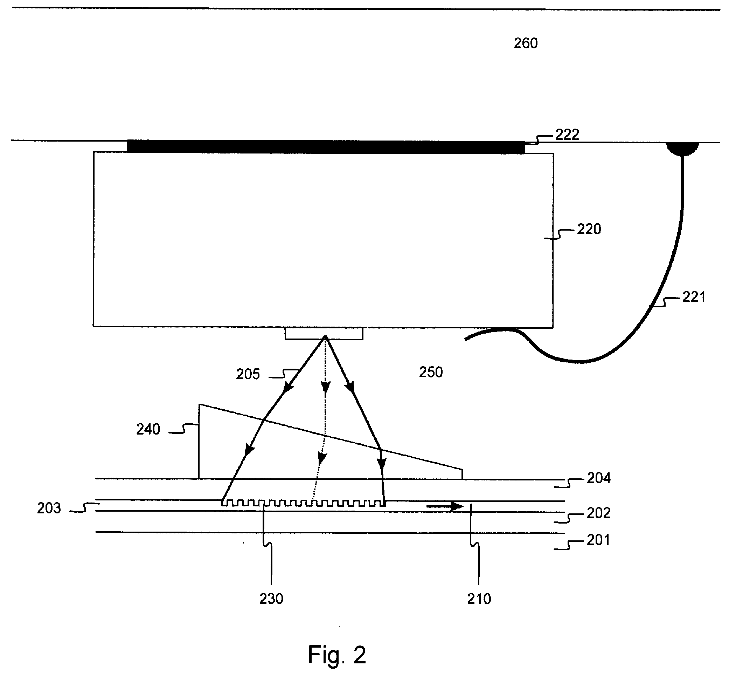

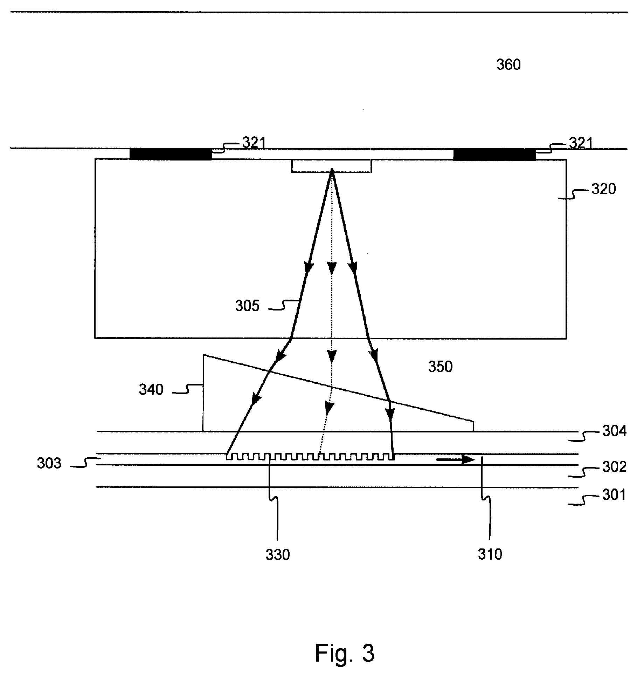

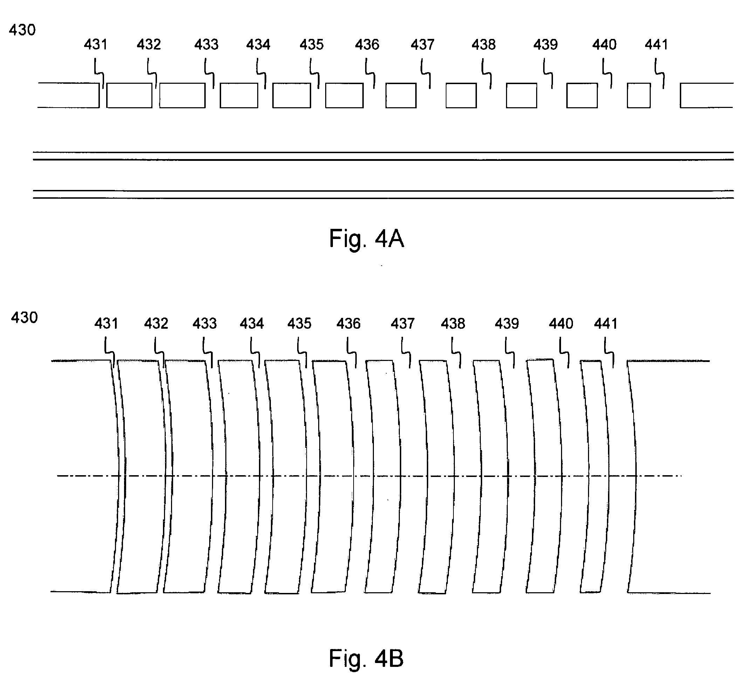

The international patent application WO 2004/072694 entitled "Optical Waveguide Grating Coupler Incorporating Reflective Optical Elements and AntiReflection Elements" describes another grating coupler (102 in Fig. 2 and Fig. 3) for coupling light between a planar on-chip waveguide (100 in Fig. 4) and an optical fibre (106 in Fig. 4). In WO 2004/072694, reflective and anti-reflective optical elements (e.g. 444 and 486) are integrated in the grating coupler to suppress reflection of light on the surface of the grating coupler and suppress transmission of light through the grating coupler. Although the optical coupling efficiency between waveguide and optical fibre is further improved, WO 2004/072694 remains complex in terms of grating structure, and still does not consider situations or applications wherein a gap of 30 to 300 micron must be bridged with minimal optical losses and minimal light beam divergence.

The use of focusing grating, i.e. a grating device designed to focus light over a distance in the order of millimetres, is known from applications such as optical pick-up in CD / DVD / Blu-ray technology or the like. Such focusing grating is for instance described in United States patent application US 2005/0008294 and US 2005/0121415. The table in Fig. 2B of US 2005/0141812 for instance confirms that the focal distances in these applications range above 300 micron.

The papers "Grating based optical fibre interfaces for Silicon-On-Insulator photonic integrated circuits" by Roelkens et al., published in IEEE Journal of Selected Topics in Quantum Electronics, Vol. 17, No. 3, pages 571-580 and "Grating couplers for coupling between optical fibres and nanophotonic waveguides" by Taillaert et al., published in Japanese Journal of Applied Physics, Vol. 45, No. 8A, pages 6071-6077 describe broadband waveguide grating couplers. These couplers are used to couple light between an integrated waveguide and an adjacent fibre or other optoelectronic device. These papers do not address out-of-plane focusing to bridge a gap between the grating and the fibre or other optoelectronic device.

The paper "Surface emitting unstable resonator lasers with integrated diffractive beam for forming elements", by Eriksson et al., published in IEEE Photonics Technology Letters, Vol. 9, No. 12, pages 1570-1572 uses an out-of-plane focusing grating coupler. The focusing distance in this paper is > 500 microns. Also, the beam at the grating position has a diameter of more than 100 microns. As a result the bandwidth of the grating coupler is very narrow. In applications where the temperature of the laser is not controlled, this is an issue because the wavelength of a typical laser shifts with temperature.

United States Patent Application US 2011/0188808 entitled "Optical Coupling Method" describes an improved grating for coupling a light beam from an optical fibre into or out of a planar waveguide. The improvement consists in scattering elements of differing lengths to avoid usage of tapers. Although a standard lithography process can be used (see paragraph [0017]), US 2011/0188808 fails to recognize the problem of distances of 30 to 300 micron that may have to be bridged between fibre and waveguide in particular applications and consequently also fails to teach a solution for divergence of the light beam in such air gap.

United States Patent US 6,285,813 entitled "Diffractive Grating Coupler and Method" describes an optical coupler with diffractive grating for coupling light between an optical waveguide and a light source/detector wherein the use of a lens is avoided. The diffractive grating thereto has a predetermined pattern with decreasing surface grating period, fringes having a variable slant angle, and surface grating pattern with increasing curvature radius along the light propagation direction. The slanted fringes in the volume grating of US 6,285,813 are made by holographic printing in the volume of a photosensitive material. Further, the surface relief grating has slanted grooves with variable angle. Both the volume grating and the surface relief grating therefore require non-standard manufacturing tools hence increasing the cost and complicating the manufacturing.

United States patent application US 2011/0075970 entitled "Integrated Photonic Device" describes a combination of a grating coupler and a refractive surface that can be used to couple light from a VCSEL into a planar waveguide. To bridge a distance between the refractive surface and the VCSEL, US 2011/0075970 suggests a curved refractive surface (450 in Fig. 2) to focus the light. Although that solution may be suitable to bridge a gap of 30 to 300 microns between the grating coupler and the VCSEL, the fabrication of such a curved refractive surface on top of a grating coupler is technologically very challenging. Indeed, the refractive surface is "integrally formed on top of the grating coupler" ([0053] p.4), using e.g. an imprinting technique ([0055] p. 5).

United States patent application US 2004/0156590 entitled "Optical waveguide grating coupler" describes broadband waveguide grating couplers. These couplers are used to couple light between an integrated waveguide and an adjacent fibre. This patent application does not address out-of-plane focusing to bridge a gap between the grating and the fibre.

United States patent application US 2005/0141812 A1 discloses a planar focusing grating coupler that uses a fine diffraction grating for focusing light out of a (planar) light waveguide. The grating disclosed in this document can be assumed to be able to provide a focus distance between 30 $\mu$m and 300 $\mu$m,

In summary, existing solutions for coupling light between a planar waveguide in an optical integrated chip and an out-of-plane light source/receiver rely on lenses, micro-lenses or gratings that are difficult to manufacture using standard manufacturing tools and processes in a CMOS fab. In general, the existing integrated coupling devices do not recognize the problem of bridging a gap of 30 to 300 microns between waveguide and light source/receiver as required in certain applications and evidently do not provide an adequate solution to this problem.

It is therefore an objective of the present invention to provide an optical coupling arrangement for highly efficient out-of-plane coupling of light between a waveguide and a light source in an application where the light source is located at a distance of 30 to 300 microns from the integrated waveguide. It is in particular an objective to resolve the problem of divergence of the light beam in such gap of 30 to 300 microns. It is a further objective to provide such an optical arrangement that can be manufactured using standard tools and processes in a CMOS fab.

## Summary of the Invention

According to the present invention, the above defined objectives are realized through an optical coupling arrangement for coupling light between an integrated optical waveguide and a light source as defined by claim 1.

Thus, the invention consists in integrating a focusing grating in the waveguide layer, and designing the focusing grating for out-of-plane coupling light from a light source, and designing the focusing grating to meet a focal distance between 30 microns and 300 microns. The focusing of the light is performed out-of-plane with respect to the integrated optical waveguide, and over a focusing distance of at least 30 microns and at most 300 microns. The use of a lens or micro-lens to focus the light beam is avoided, and the ellipse arc shaped grating with grooves or holes can be made through lithography and vertical partial or complete etching, i.e. standard technology available in any CMOS lab.

In the case of an optical pick-up head, the refractive index contrast is quite low as a result of which some approximations can be used in the design of gratings that are only accurate for low refractive index contrast gratings. In case of a focal distance between 30 and 300 microns, the refractive index contrast is higher and the approximations cannot be used. As a consequence, rigorous electromagnetic modelling is required. All parameters, i.e. width of the grooves, depth of the grooves, and distance between the grooves, have to be controlled very accurately to fabricate a focusing grating with high efficiency that focuses at the target focal distance between 30 and 300 microns. Whereas an optical pick-up head can tolerate some error on the focal distance - the optical pick-up head is mounted on a servo motor that adjusts continuously to focus at the right place - the error that can be tolerated on the focal distance between the optical coupler and light source/receiver is below 5 to 10 micrometers. This is so because the VCSEL or optical fibre is fixed. It is consequently not evident to use a technique known from optical pick-up, i.e. a focusing grating, in an application where light must be coupled between an integrated waveguide on the one hand and an optical source/receiver on the other hand.

According to an aspect defined by claim 1, the light source/receiver is a Vertical-Cavity Surface-Emitting Laser or VCSEL, positioned to emit light in a direction perpendicular to a direction of the integrated optical waveguide, and the optical coupling arrangement further comprises:

- a refractive surface positioned between the VCSEL and the integrated optical waveguide and shaped to refract the light emitted by the VCSEL over an angle of at least 3 degrees.

Indeed, in situations or applications where the light is sent perpendicularly onto the waveguide, the integrated focusing grating is combined with a refractive surface, e.g. a prism, positioned between the light source and waveguide in order to deviate the incident light over an angle of at least 3 degrees. This way, focusing grating is enabled as opposed to the situation where the light arrives under perpendicular direction onto the grating. It is not possible to design a focusing grating for the perpendicular direction because of the associated reflection (2nd order diffraction). By deviating from the perpendicular direction by at least 3 degrees, this reflection problem is avoided.

Further optionally, as defined by claim 3, the VCSEL is a front-side emitting VCSEL with bonded wires electrically interconnecting said VCSEL and a substrate whereon the VCSEL is mounted.

Indeed, one application wherein a distance of at least 30 microns has to be respected between the integrated waveguide and optical source is where a front-side emitting VCSEL is used with bonded wires realizing the electrical connections between the VCSEL and substrate whereon the VCSEL is mounted. Such VCSEL can be manufactured cost-efficiently and is typically mounted flip-chipped onto the optical integrated circuit where the waveguide forms part of. The bonded wires require a distance of at least 30 microns to be respected between the top side of the VCSEL and the waveguide.

Alternatively, as defined by claim 4, the VCSEL is a back-side emitting VCSEL.

Indeed, a second situation wherein the light has to travel a distance of at least 30 microns between the light source and integrated waveguide is where a backside emitting VCSEL is used. Such back-side emitting VCSEL may be unavoidable in circumstances where the electrical connectivity with VCSEL must be realized at the back side of the substrate whereon the VCSEL is mounted.

As further defined by claim 5, the distance of at least 30 microns and at most of 300 microns may result from one or more intermediate devices positioned between the integrated optical waveguide and the light source and having a height of 30 to 300 microns.

Hence, a third situation requiring a distance of 30 to 300 microns between the integrated optical waveguide and the light source/detector is where an intermediate transparent device is used between the waveguide and light source, intermediate transparent device having a height of 30 to 300 microns.

Optionally, as defined by claim 6, the undercladding layers in the optical coupling arrangement according to the invention form a distributed Bragg reflector.

Indeed, the undercladding layers preferably mirror the light in order to minimize loss of light in the substrate. Thereto, a distributed Bragg reflector or DBR may be integrated in the undercladding layers.

Alternatively, as defined by claim 7, the undercladding layers in the optical coupling arrangement according to the invention form a metal mirror.

Thus, an alternative for the DBR mirror, may be a metal mirror.

Further optionally, as defined by claim 8, the focusing grating in the optical coupling arrangement according to the invention comprises a pattern of etched, ellipse arc shaped grooves.

Such embodiment with grating based on completely etched or partially etched grooves is preferred when silicon nitride is used as material for the waveguide or core layer.

Alternatively, as defined by claim 9, the focusing grating in the optical coupling arrangement according to the invention comprises a pattern of etched holes, distributed along ellipse shaped arcs, the etched holes having increasing and decreasing sizes between a first ellipse shaped arc and a last ellipse shaped arc.

Such embodiment with etched holes is preferred when silicon is used as material for the waveguide or core layer.

## Brief Description of the Drawings

Fig. 1 illustrates a first exemplary device of an optical coupling arrangement with focusing grating in an application where an intermediate device in between waveguide and optical fibre results in a gap of 30 to 300 micron;

Fig. 2 illustrates a second embodiment of the optical coupling arrangement with focusing grating and prism according to the present invention in an application where a front-side emitting VCSEL with bonded wires results in a gap of 30 to 300 micron;

Fig. 3 illustrates a third embodiment of the optical coupling arrangement with focusing grating and prism according to the present invention in an application where a back-side emitting VCSEL results in a gap of 30 to 300 micron;

Fig. 4A and Fig. 4B respectively represent a side view and top view of a completely etched focusing grating as used in a first embodiment of the optical coupling arrangement according to the present invention; and

Fig. 5A and Fig. 5B respectively represent a side view and top view of a partially etched focusing grating as used in alternate second embodiment of the optical coupling arrangement according to the present invention; and

Fig. 6A and Fig. 6B respectively represent a top view and side view of a focusing grating as used in a third embodiment of the optical coupling arrangement according to the present invention.

## Detailed Description of Embodiment(s)

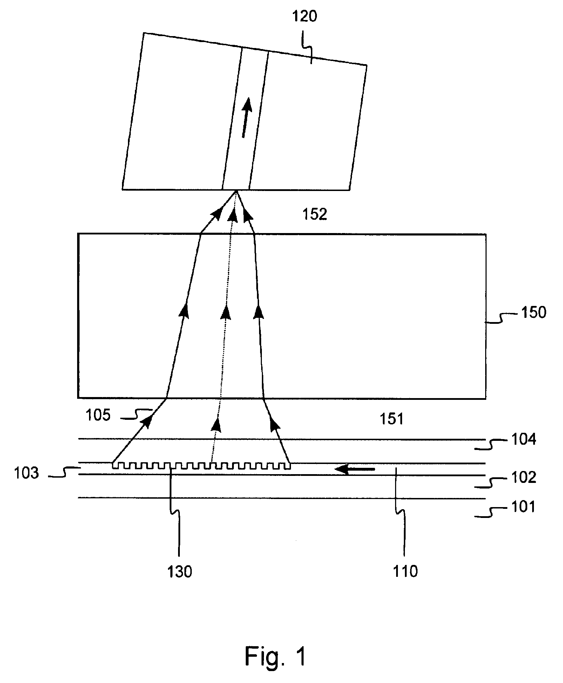

In the first examplary device, illustrated by Fig. 1, an optical integrated circuit with substrate 101, undercladding layer 102, core layer 103 and overcladding layer 104 is located at a certain distance from an optical fibre 120 wherein light 105 propagating through an optical waveguide 110 integrated in the core layer 103 is coupled. The distance between the fibre 120 and the optical integrated circuit 101-104 is 30 to 300 microns as a result of an intermediate transparent device 150 held in between the optical integrated circuit and optical fibre through glue 151 and 152.

Through lithography and etching, a focusing grating 130 with ellipse arc shaped grooves has been integrated in the core layer 103. This focusing grating 130 is designed to couple the light 105 out-of-plane into the fibre 120, and to focus the light beam 105 over a distance between 30 and 300 micron in order to efficiently couple and converge the light travelling through waveguide 110 into the fibre 120, while bridging the gap introduced by intermediate device 150.

In a first embodiment illustrated by Fig. 2, an optical integrated circuit with substrate 201, undercladding layer 202, core layer 203 and overcladding layer 204 receives light 205 from a front-side emitting VCSEL 220. The front-side emitting VCSEL 220 has bonded wiring, i.e. bond wires 221 for connectivity with a bond pad on substrate 260. These bond wires 221 realize electrical connectivity between the VCSEL 220 and other circuitry. As a result of the bond wires 221, an air gap 250 of at least 30 microns must be respected between the front-side emitting VCSEL 220 and the optical integrated circuit 201-204. Typically, the VCSEL 220 shall be flip-chip mounted on the optical integrated circuit 201-204 using spacers to realize the gap 250.

In order to efficiently couple the light 205 that is emitted perpendicularly onto the integrated circuit by VCSEL 220 into a waveguide 210 integrated in the core layer 203 of the integrated circuit, a focusing grating 230 with ellipse arc shaped grooves is integrated in core layer 203 through lithography and etching. In addition, a prism 240 with refractive surface is positioned in the gap 250 between optical integrated circuit 201-204 and VCSEL 220 in order to deviate the incident angle of light beam 205 over at least 3 degrees. This way, focusing grating is made possible.

In a second embodiment illustrated by Fig. 3, an optical integrated circuit with substrate 301, undercladding layer 302, core layer 301 and overcladding layer 304 receives light 305 from a back-side emitting VCSEL 320. Such back-side emitting VCSEL 320 is typically mounted on a submount 360 and electrical connectivity is realized through bond pads 321 between the VCSEL 320 and submount 360. As a result of the thickness of the back-side emitting VCSEL 320, the light beam 305 has to bridge a gap of at least 30 micron towards the optical integrated circuit 301-304.

Just like in the first embodiment, a focusing grating 330 is integrated in the core layer 302 in order to couple and focus the received light 305 into a planar integrated waveguide 310. In order to avoid that the light 305 perpendicularly falls onto the optical integrated circuit 301-304, a prism 340 with refractive surface is located in the space 350 between back-side emitting VCSEL 320 and optical integrated circuit 301-304.

Fig. 4A and Fig. 4B illustrate respectively from a side perspective and a top perspective a focusing grating 430 that forms part of an embodiment of the optical coupling arrangement according to the invention. The focusing grating 430 has a number of grating grooves 431, 432, 433, 434, 435, 436, 437, 438, 439, 440, 441 that are created through a standard lithography process. The grooves have the shape of arcs of an ellipse and they are vertically completely etched. The number of grating grooves and the grooves widths depend on the focusing distance and beam size.

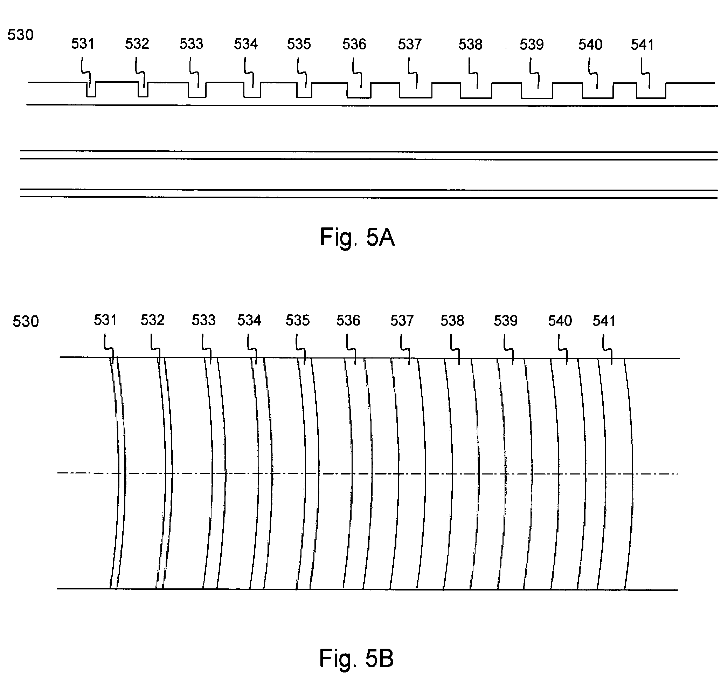

Fig. 5A and Fig. 5B illustrate the respective side view and top view of an alternate focusing grating 530 that forms part of another embodiment of the optical coupling arrangement according to the invention. This focusing grating 530 again has a number of elliptic arc shaped grooves 531, 532, 533, 534, 535, 536, 537, 538, 539, 540, 541 that are created through a standard lithography process with tools available in a CMOS fab. In the embodiment of Fig. 5A and Fig. 5B, the grooves 531-541 however are vertically partially etched.

The elliptical shape, the width of the grooves, the distance between the grooves, the number of grooves and the depth of the grooves are the parameters to control when designing a focusing grating with a focusing distance between 30 and 300 microns. There are basically two formulas whereon the design of the focusing grating is based. The first formula expresses the phase matching condition, the second formula enables to achieve a Gaussian shaped beam with a grating coupler.

The phase matching condition is expressed as follows:

$$n_e kz + n_f kr = N2\pi \qquad (1)$$

with:

$$k = \frac{2\pi}{\lambda} \qquad (2)$$

Herein,

$n_e$ represents the effective index of the waveguide mode;
$n_f$ represents the refractive index of the medium where the focusing beam is;
z represents the coordinate along the waveguide axis;
r represents the distance from the focal point to the grating groove;
$\lambda$ represents the wavelength; and
N represents an integer.

To achieve a Gaussian shaped output beam from a focusing grating, the following formula must be satisfied:

$$2\alpha(z) = \frac{G^2(z)}{1 - \int_0^z G^2(t)dt} \qquad (3)$$

Herein,

$\alpha$ represents the coupling strength; and
$G^2$ represents the Gaussian distribution.

From equation (1) the elliptical shape and the pitch of the grating can be calculated. From equation (3) the width and depth of the grating grooves can be calculated.

In case of a high refractive index contrast, additional numerical modelling is required to design the focusing grating. The larger the focusing distance, the larger the grating and the smaller the refractive index contrast. The smaller the focusing distance, the smaller the focusing grating and the higher the refractive index contrast. As a result, for focal distances between 30 and 300 microns, additional numerical modelling is needed. A shorter focal distance requires a focusing grating with a higher coupling strength. The coupling strength is dependent on the refractive index contrast, but also the groove width and groove depth. In general, the materials used and the technology used to fabricate the grating grooves will determine which range of $\alpha$ can be achieved and consequently which focusing distance can be achieved.

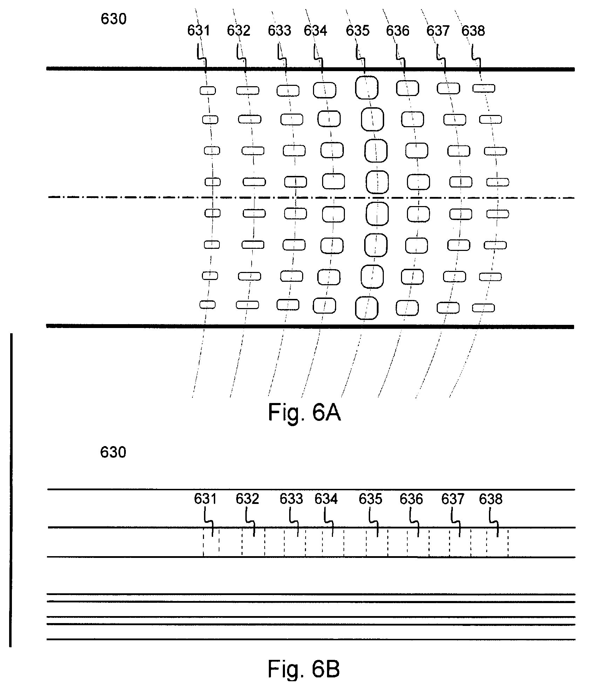

Fig. 6A and Fig. 6B illustrate the respective top view and side view of a third embodiment of the focusing grating 630 as used in an optical coupling arrangement according to the invention. The focusing grating 630 contains etched holes. These etched holes are positioned along elliptical shaped arcs 631, 632, 633, 634, 635, 636, 637 and 638. In other words, these etched holes form some kind of segmented grooves. The diameter of the etched holes is increasing from 631 to 635. The diameter is again decreasing from 635 to 638. In general, it is not symmetric. This type of grating with etched holes offers more design freedom than a grating consisting of etched grooves. In particular, for a given material and etch depth, the range of grating coupling strength that can be achieved with this type of grating will be different from the range of coupling strength that can be achieved with etched grooves. This type of grating is preferably used in silicon as material, whereas the gratings illustrated by Fig. 4A, Fig. 4B, Fig. 5A and Fig. 5B may be used in nitride based waveguide layers.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. An optical coupling arrangement for coupling light (205; 305) between an integrated optical waveguide (210; 310) and a light source (220; 320), whereby said light source is a Vertical-Cavity Surface-Emitting Laser or VCSEL (220; 320), positioned to emit a divergent light beam in a direction perpendicular to a direction of said integrated optical waveguide (210; 310), said optical coupling arrangement comprising: - a refractive surface (240; 340) positioned between said VCSEL (220; 320) and said integrated optical waveguide (210; 310) and shaped to refract and deviate said divergent light beam (205; 305) emitted by said VCSEL (220; 320) over an angle of at least 3 degrees

   - a substrate (201; 301);
   - one or more undercladding layers (202; 302);
   - a core layer (203; 303) comprising said integrated optical waveguide (210; 310);
   - one or more overcladding layers (204; 304); **characterized in that** the coupling arrangement further comprising:
   - a focusing grating (230; 330; 430; 530; 630) designed for coupling light from said light source (220; 320) to said integrated optical waveguide (210; 310), said focusing grating (230; 330; 430; 530; 630) comprising an ellipse arc shaped pattern (431-441; 531-541; 631-638) designed to focus said light (205; 305) over a focusing distance of at least 30 microns and at most 300 microns.

2. An optical coupling arrangement according to claim 1,
   wherein said VCSEL is a front-side emitting VCSEL (220) with bonded wires electrically interconnecting said VCSEL (220) and a substrate whereon said VCSEL (220) is mounted.

3. An optical coupling arrangement according to claim 1,
   wherein said VCSEL is a back-side emitting VCSEL (320).

4. An optical coupling arrangement according to claim 1, wherein said distance of at least 30 microns results from one or more intermediate devices (150) positioned between said integrated optical waveguide (110) and said light source/receiver (120).

5. An optical coupling arrangement according to claim 1,
   wherein said undercladding layers (102; 202; 302) form a distributed Bragg reflector.

6. An optical coupling arrangement according to claim 1,
   wherein said undercladding layers (102; 202; 302) form a metal mirror.

7. An optical coupling arrangement according to claim 1,
   wherein said focusing grating (130; 230; 330; 430; 530) comprises a pattern of etched, ellipse arc shaped grooves (431-441; 531-541).

8. An optical coupling arrangement according to claim 1,
   wherein said focusing grating (630) comprises a pattern of etched holes, distributed along ellipse shaped arcs (631-638), said etched holes having increasing and decreasing sizes between a first ellipse shaped arc (631) and a last ellipse shaped arc (638).

**Patentansprüche**

1. Optische Kopplungsanordnung zum Koppeln von Licht (205; 305) zwischen einem integrierten optischen Wellenleiter (210; 310) und einer Lichtquelle (220; 320), wobei die Lichtquelle ein Oberflächenemitter (Vertical-Cavity Surface-Emitting Laser) oder VCSEL (220; 320) ist, der so platziert ist, dass er einen divergenten Lichtstrahl in einer Richtung senkrecht zu einer Richtung des integrierten optischen Wellenleiters (210; 310) abstrahlt, wobei die optische Kopplungsanordnung umfasst:

   - eine lichtbrechende Oberfläche (240; 340), die zwischen dem VCSEL (220; 320) und dem integrierten optischen Wellenleiter (210; 310) platziert ist und geformt ist, um den von dem VCSEL (220; 320) abgestrahlten divergenten Lichtstrahl (205; 305) zu brechen und um einen Winkel von mindestens 3 Grad abzulenken;
   - ein Substrat (201; 301);
   - eine oder mehrere untere Verkleidungsschichten (202; 302);
   - eine Kernschicht (203; 303), die den integrierten optischen Wellenleiter (210; 310) umfasst;
   - eine oder mehrere obere Verkleidungsschichten (204; 304);

   **dadurch gekennzeichnet, dass** die Kopplungsanordnung außerdem umfasst:

   - ein Fokussiergitter (230; 330; 430; 530; 630), das ausgelegt ist, das Licht von der Lichtquelle (220; 320) mit dem integrierten optischen Wellenleiter (210; 310) zu koppeln, wobei das Fokussiergitter (230; 330; 430; 530; 630) ein ellipsenbogenförmiges Muster (431 bis 441; 531 bis 541; 631 bis 638) umfasst, das ausgelegt ist, das Licht (205; 305) über einen Fokussierabstand von mindestens 30 Mikrometer und höchstens 300 Mikrometer zu fokussieren.

2. Optische Kopplungsanordnung nach Anspruch 1,
wobei der VCSEL ein nach vorne abstrahlender VCSEL (220) mit kontaktierten Kabeln ist, die den VCSEL (220) mit einem Substrat elektrisch verbinden, auf das der VCSEL (220) montiert ist.

3. Optische Kopplungsanordnung nach Anspruch 1, wobei der VCSEL ein nach hinten abstrahlender VCSEL (320) ist.

4. Optische Kopplungsanordnung nach Anspruch 1, wobei sich der Abstand von mindestens 30 Mikrometer aus einem oder mehreren zwischengeschalteten Einheiten (150) ergibt, die zwischen dem integrierten optischen Wellenleiter (110) und der Lichtquelle oder dem Lichtempfänger (120) platziert sind.

5. Optische Kopplungsanordnung nach Anspruch 1, wobei die unteren Verkleidungsschichten (102; 202; 302) einen Bragg-Spiegel bilden.

6. Optische Kopplungsanordnung nach Anspruch 1, wobei die unteren Verkleidungsschichten (102; 202; 302) einen Metallspiegel bilden.

7. Optische Kopplungsanordnung nach Anspruch 1, wobei das Fokussiergitter (130; 230; 330; 430; 530) ein Muster geätzter ellipsenbogenförmiger Kerben (431 bis 441; 531 bis 541) umfasst.

8. Optische Kopplungsanordnung nach Anspruch 1, wobei das Fokussiergitter (630) ein Muster geätzter Löcher umfasst, die entlang ellipsenförmiger Bögen (631 bis 638) verteilt sind, wobei die geätzten Löcher zwischen einem ersten ellipsenförmigen Bogen (631) und einem letzten ellipsenförmigen Bogen (638) zunehmende und abnehmende Größen aufweisen.

**Revendications**

1. Agencement de couplage optique destiné à coupler de la lumière (205 ; 305) entre un guide d'ondes optique intégré (210 ; 310) et une source de lumière (220 ; 320), par lequel
ladite source de lumière est une diode laser à cavité verticale émettant par la surface ou diode VCSEL (220 ; 320) positionnée pour émettre un faisceau lumineux divergent dans une direction perpendiculaire à la direction dudit guide d'ondes optique intégré (210 ; 310), ledit agencement de couplage optique comprenant :

   - une surface de réfraction (240 ; 340) positionnée entre ladite diode VCSEL (220 ; 320) et ledit guide d'ondes optique intégré (210 ; 310) et conçu de forme permettant de réfracter et de dévier ledit faisceau de lumière divergent (205 ; 305) émis par ladite diode VCSEL (220 ; 320) sur un angle d'au moins 3 degrés,
- un substrat (201 ; 301),
- une ou plusieurs couches de gainage inférieures (202 ; 302),
- une couche formant âme (203 ; 303) comprenant ledit guide d'ondes optique intégré (210 ; 310),
- une ou plusieurs couches de gainage supérieures (204 ; 304),

**caractérisé en ce que** l'agencement de couplage comprend en outre :

- un réseau de focalisation (230 ; 330 ; 430 ; 530 ; 630) conçu pour coupler la lumière provenant de ladite source de lumière (220 ; 320) audit guide d'ondes optique intégré (210; 310), ledit réseau de focalisation (230 ; 330; 430 ; 530; 630) comprenant un motif en forme d'arc d'ellipse (431 à 441 ; 531 à 541 ; 631 à 638) conçu pour focaliser ladite lumière (205 ; 305) sur une distance de focalisation d'au moins 30 microns jusqu'à au plus 300 microns.

2. Agencement de couplage optique selon la revendication 1,
dans lequel ladite diode VCSEL est une diode VCSEL d'émission par l'avant (220) comportant des fils soudés reliant électriquement ladite diode VCSEL (220) et un substrat sur lequel est montée ladite diode VCSEL.

3. Agencement de couplage optique selon la revendication 1,
dans lequel ladite diode VCSEL est une diode VCSEL d'émission par l'arrière (320).

4. Agencement de couplage optique selon la revendication 1, dans lequel ladite distance d'au moins 30 microns résulte d'un ou de plusieurs dispositifs intermédiaires (150) positionnés entre ledit guide d'ondes optique intégré (110) et ledit composant formant source et récepteur de lumière (120).

5. Agencement de couplage optique selon la revendication 1,
dans lequel lesdites couches de gainage inférieures (102 ; 202 ; 302) forment un réflecteur de Bragg réparti.

6. Agencement de couplage optique selon la revendication 1,
dans lequel lesdites couches de gainage inférieures (102 ; 202 ; 302) forment un miroir métallique.

7. Agencement de couplage optique selon la revendication 1,
dans lequel ledit réseau de focalisation (130 ; 230 ; 330 ; 430 ; 530) comprend un motif de rainures gravées en forme d'arc d'ellipse (431 à 441 ; 531 à 541).

8. Agencement de couplage optique selon la revendication 1,
dans lequel ledit réseau de focalisation (630) comprend un motif de trous gravés répartis le long d'arcs en forme d'ellipse (631 à 638), lesdits trous gravés présentant des tailles augmentant et diminuant entre un premier arc en forme d'ellipse (631) et un dernier arc en forme d'ellipse (638).

Fig. 1

150, 151, 152, 120, 110, 130, 101, 102, 103, 104, 105

Fig. 2

Fig. 3

430

431  432  433  434  435  436  437  438  439  440  441

Fig. 4A

430

431  432  433  434  435  436  437  438  439  440  441

Fig. 4B

EP 2 626 731 B1

530  531  532  533  534  535  536  537  538  539  540  541

## Fig. 5A

530  531  532  533  534  535  536  537  538  539  540  541

## Fig. 5B

630

631 632 633 634 635 636 637 638

Fig. 6A

630

631 632 633 634 635 636 637 638

Fig. 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004072693 A
- WO 2004072694 A
- US 20050008294 A
- US 20050121415 A
- US 20050141812 A
- US 20110188808 A
- US 6285813 B
- US 20110075970 A
- US 20040156590 A
- US 20050141812 A1

**Non-patent literature cited in the description**

- **ROELKENS et al.** Grating based optical fibre interfaces for Silicon-On-Insulator photonic integrated circuits. *IEEE Journal of Selected Topics in Quantum Electronics,* vol. 17 (3), 571-580
- **TAILLAERT et al.** Grating couplers for coupling between optical fibres and nanophotonic waveguides. *Japanese Journal of Applied Physics,* vol. 45 (8A), 6071-6077
- **ERIKSSON et al.** Surface emitting unstable resonator lasers with integrated diffractive beam for forming elements. *IEEE Photonics Technology Letters,* vol. 9 (12), 1570-1572